Europäisches Patentamt

(19) European Patent Office

Office européen des brevets

(11) Veröffentlichungsnummer: **0 098 412**
**B1**

(12) **EUROPÄISCHE PATENTSCHRIFT**

(45) Veröffentlichungstag der Patentschrift:
03.06.87

(51) Int. Cl.⁴: **C 08 G 69/28**

(21) Anmeldenummer: **83105765.8**

(22) Anmeldetag: **13.06.83**

(54) Verfahren zur kontinuierlichen Herstellung von Polyamiden.

(30) Priorität: **25.06.82 DE 3223823**

(43) Veröffentlichungstag der Anmeldung:
**18.01.84 Patentblatt 84/3**

(45) Bekanntmachung des Hinweises auf die Patenterteilung:
**03.06.87 Patentblatt 87/23**

(84) Benannte Vertragsstaaten:
**CH DE FR GB IT LI NL**

(56) Entgegenhaltungen:
**DE - A - 2 627 342**
**GB - A - 1 494 793**
**US - A - 3 900 450**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Nielinger, Werner, Dr., Baerenstrasse 21, D-4150 Krefeld (DE)**
Erfinder: **Alewelt, Wolfgang, Dr., Bodelschwinghstrasse 32, D-4150 Krefeld (DE)**
Erfinder: **Hermann, Karl Heinz, Dr., Scheiblerstrasse 111, D-4150 Krefeld (DE)**

## Beschreibung

Die vorliegende Erfindung betrifft ein Verfahren zur kontinuierlichen Herstellung von Polyamiden, wobei die Vorkondensation der wässrigen Salzlösung aus Diaminen und Dicarbonsäuren unter Normaldruck erfolgt.

Üblicherweise werden Polyamide aus Diaminen und Dicarbonsäuren, z.B. solche aus Adipinsäure und Hexamethylendiamin, hergestellt, indem man zunächst eine wässrige Salzlösung bei einem Druck von etwa 18 bar auf Temperaturen von 210–220°C erhitzt, zu einem wasserlöslichen Vorkondensat mit niedrigem Molekulargewicht kondensiert, anschliessend unter gleichzeitiger Temperaturerhöhung auf Atmosphärendruck entspannt und bei etwa 270°C bis zum gewünschten Molekulargewicht als Polyamid weiter kondensiert.

Beim Entspannen des Reaktionsgemisches unter Abgabe von Wasserdampf kann das Vorkondensat erstarren, wenn die zum Verdampfen des Wassers erforderliche Wärme nicht genügend schnell nachgeliefert wird.

Bei der diskontinuierlichen Verfahrensweise umgeht man diese Schwierigkeit, indem man so langsam entspannt, dass die Erstarrungstemperatur des Vorkondensates nicht unterschritten wird. Bei kontinuierlich arbeitenden Verfahren müssen besondere Massnahmen getroffen werden, um einen störungsfreien Ablauf zu gewährleisten und ein Erstarren des Vorkondensates zu vermeiden.

So pumpt man gemäss DAS 1 595 828, GB 674 954 oder US 3 846 381 die wässrige Salzlösung in ein langes, gegebenenfalls sich erweiterndes Rohr, das auf die Polykondensationstemperatur erhitzt ist. Beim Durchgang der Salzlösung durch das Rohr wird das Wasser kontinuierlich abgegeben, wobei der Druck stetig bis auf Atmosphärendruck abnimmt. Nach einer anderen Verfahrensweise erhitzt man die wässrige Salzlösung unter einem Druck von wenigstens 10 bar und mischt sie mit bereits gebildetem Vorkondensat. Gemäss der Lehre der US-Patentschrift 3 900 450 wird das Wasser in der Druckstufe über eine Kolonne abdestilliert, oder man leitet, wie in der deutschen Patentschrift 1 131 011 beschrieben, das unter Druck stehende Vorkondensat in eine durch ein Rohr strömende Schmelze und dann in einen Verdampfer oder gemäss der belgischen Patentschrift 613 848 direkt in das in einem Verdampfer befindliche Kondensat. Bei diesen Verfahrensweisen wird die für das Verdampfen des Wassers beim Entspannen erforderliche Wärme dem Wärmeinhalt der Schmelze entnommen und kann leicht wieder zugeführt werden.

Auch die bisher bekannten, bei Atmosphärendruck durchzuführenden Polykondensationsverfahren sind zur kontinuierlichen Herstellung amorpher Polyamide aud Diaminen und Dicarbonsäuren wenig geeignet. Gemäss der Lehre der DAS 1 495 393 und DOS 2 627 342 kann man Vorkondensate, die von Isophthalsäure- oder Terephthalsäuredimethylester als Säurekomponente ausgehend erhalten wurden, bei Atmosphärendruck weiter erhitzen, ohne dass die Produkte erstarren. Dies ist jedoch nach Angaben der DAS 1 495 393 nicht möglich, wenn man die Dicarbonsäuren verwendet. In einer Reihe weiterer Patentanmeldungen, z.B. in DOS 2 726 262, DOS 2 729 029, wird die Polykondensation von Salzen aus Diaminen mit oder ohne Zusatz von Wasser bei Atmosphärendruck gelehrt. Da aber das Salz oder das nach dem Abdestillieren des Wassers erstarrte Oligomere wieder geschmolzen werden muss, eignet sich diese Verfahrensweise nur zur Herstellung geringer Mengen Polyamid und nicht für ein kontinuierliches Verfahren in grösserem Massstab.

Überraschenderweise wurde nun gefunden, dass man Polyamide aus Salzen von Diaminen und Dicarbonsäuren ausschliesslich bei Atmosphärendruck herstellen kann, ohne dass dabei die Reaktionsmischung während der Herstellung erstarrt und wieder aufgeschmolzen werden muss, indem man nämlich die wässrige Salzlösung kontinuierlich in ein entsprechendes Vorkondensat einspeist und das Wasser gleichzeitig abdestilliert.

Gegenstand der Erfindung sind kontinuierliche Verfahren zur Herstellung von vorzugsweise amorphen Polyamiden durch Polykondensation wässriger Lösungen von Salzen aus weitgehend äquimolaren Mengen von Diaminen und Dicarbonsäuren, die dadurch gekennzeichnet sind, dass man bei Atmosphärendruck die wässrige Salzlösung zu einer entsprechenden Vorkondensatschmelze kontinuierlich zugibt und gleichzeitig das Wasser der Salzlösung abdestilliert, wobei die Temperatur der Vorkondensationsschmelze nicht unter 180°C, vorzugsweise 200°C, absinken soll, und die laufend entnommene Vorkonzentratschmelze in bekannter Weise bei Atmosphärendruck weiter kondensiert wird.

Das erfindungsgemässe Verfahren ist vorzugsweise zur Herstellung amorpher Polyamide und/oder teilkristalliner Polyamide mit einem Erweichungspunkt unter 230°C, vorzugsweise bis 200°C geeignet. Beispiele zur Herstellung von Polyamiden nach diesem Verfahren sind die Polyamide aus Isophthalsäure und Hexamethylendiamin, aus Isophthalsäure und Trimethylhexamethylendiamin, aus Terephthalsäure und Trimethylhexamethylendiamin oder aus Mischungen von Isophthalsäure, Hexamethylendiamin und Trimethylhexamethylendiamin oder Isophthalsäure, Hexamethylendiamin und Isophorondiamin, wobei auch andere Diamine, Dicarbonsäuren oder Aminocarbonsäuren bzw. deren Lactame wie Adipinsäure, Azelainsäure, Terephthalsäure, Bis-(4-aminocyclohexyl)-methan, 3,3'-Dimethyl-4,4'-diaminodicyclohexylmethan, die isomeren Xylylendiamine, ε-Caprolactam, Laurinlactam mitverwendet werden können.

Erfindungsgemäss wird eine vorzugsweise 50–90 %ige wässrige Lösung des zur Polykondensation vorgesehenen Salzes durch Umsetzung von äquimolaren Mengen von Diaminen und Dicarbonsäuren hergestellt und diese Lösung, die auf einer Temperatur von 70–100°C gehalten wird, in eine entsprechende Vorkondensatschmelze unter Atmosphärendruck und vorzugsweise Rühren eindosiert. Dabei leitet man die Salzlösung auf die Oberfläche oder direkt in die Vorkondensatschmelze und destilliert dabei das Wasser der Salzlösung vorzugsweise über eine Kolonne ab. Dabei sollte die Zugabe der Salzlösung und das Abdestillieren des Wassers so gesteuert werden, dass die Temperatur während der Vorkondensation zwischen 180 und 240 °C, vorzugsweise zwischen 200 und 230 °C, gehalten wird.

Bei dem erfindungsgemässen Verfahren wird die Vorkondensatschmelze laufend dem Vorkondensationsgefäss, vorzugsweise einem Autoklaven, beispielsweise über ein Bodenventil, entnommen werden und in bekannter Weise bis zu dem gewünschten Molekulargewicht weiter kondensiert werden.

Die Vorkondensation sollte bis zu einer relativen Viskosität von 1,1 bis 1,8 geführt werden. Additive und Hilfsmittel, die die Polykondensation nicht stören, wie Schmiermittel, Entformungsmittel, Farbstoffe und Pigmente können mit der Salzlösung zugesetzt werden.

Die erfindungsgemäss hergestellten Polyamide eignen sich zur Verarbeitung durch Spritzguss oder Extrusion auf handelsüblichen Maschinen zur Herstellung von Formkörpern, Folien, Platten, Fasern oder Borsten.

Beispiel 1

In einem 500 ml Dreihalskolben, der mit Rührer, Tropftrichter, einem Kühler und einem verschliessbaren Ablassrohr im Boden versehen ist, werden 50 g einer 75%igen Lösung aus äquivalenten Mengen Isophthalsäure und Hexamethylendiamin in Wasser unter Stickstoff langsam aufgeheizt. Sobald der grösste Teil des Wassers verdampft ist, erstarrt das Produkt bei etwa 150 °C. Bei weiterer Temperaturerhöhung erhält man wieder eine Schmelze, zu der man weitere Salzlösung gibt. Man regelt die Zugabe der Salzlösung so, dass die Temperatur von 220 °C eingehalten wird und das mit der Salzlösung zugefügte Wasser abdestilliert. Entsprechend der Zugabe der Salzlösung entnimmt man Vorkondensat aus dem Ablassrohr. Beim vorliegenden Versuch wurden jeweils 50 g Salzlösung innerhalb 75 Minuten zum Vorkondensat gegeben.

Die relative Viskosität der entnommenen Vorkondensate, gemessen bei 25 °C an einer 1%igen Lösung in m-Kresol in einem Ubbelohde-Viskosimeter, liegt zwischen 1,44 und 1,55.

Das Vorkondensat wird nach Zusatz von 3 Gew.-% Hexamethylendiamin in einer Stunde durch Erhitzen auf 270 °C unter Stickstoff weiter kondensiert. Die relative Viskosität des Endproduktes beträgt 2,3.

Beispiel 2

Man gibt 12,5 kg einer 75%igen wässrigen Lösung des Salzes aus Isophthalsäure und Hexamethylendiamin, die zusätzlich 0,5% Isophthalsäure (bezogen auf das Salz) zur Regelung des Molekulargewichts enthält, in einen Rührautoklaven. Zur Herstellung einer Vorkondensatschmelze wird zunächst eine Stunde bei 210 °C unter dem sich einstellenden Druck von etwa 18 bar polykondensiert. Nach dem Entspannen gibt man bei Normaldruck je 1 Stunde 6,2 kg Salzlösung zum Vorkondensat. Entsprechend der zudosierten Salzmenge wird Vorkondensat durch ein Bodenventil abgelassen. Das Wasser wird über eine Füllkörperkolonne abdestilliert.

Das Vorkondensat hat eine relative Viskosität von 1,2. Man kann es bis zu einer relativen Viskosität von 3,5 nachkondensieren.

Die mechanischen Eigenschaften des aus dem kontinuierlich hergestellten Vorkondensat erhaltenen Poly(hexamethylenisophthalamids) unterscheiden sich nicht von denen diskontinuierlich hergestellter Polyamide.

In der folgenden Tabelle sind die Eigenschaften eines Produktes, das aus erfindungsgemässen Vorkondensat durch Weiterkondensation bei 270 °C hergestellt wurde, mit denen von diskontinuierlich hergestelltem Material verglichen.

| Eigenschaften | Mass-einheit | Prüfvorschrift | Herstellungsverfahren erfindungs-gemäss | diskonti-nuierlich |
|---|---|---|---|---|
| Schlagzähigkeit | kJ/m² | DIN 53 453 | n. gebr. | n. gebr. |
| Kerbschlagzähigkeit | kJ/m² | DIN 53 453 | 5,3 | 4,0 |
| Grenzbiegespannung $\sim_{bG}$ | MPa | DIN 53 452 | 155 | 155 |
| Vicat-Erweichungstemp. VST/B | °C | DIN 53 460 | 123 | 125 |
| Streckspannung $\sim_s$ | MPa | DIN 53 455 | 102 | 105 |
| Reissfestigkeit $\sim_R$ | MPa | DIN 53 455 | 70,5 | 65 |
| Reissdehnung $\varepsilon_R$ | % | DIN 53 455 | 22,4 | 40 |
| Zug-E-Modul | MPa | DIN 53 457 | 2950 | 2800 |

Beispiel 3

Man stellt eine Salzlösung her, indem man bei 90–95 °C unter Rühren 218,5 g Hexamethylendiamin und 20,43 g Isophorondiamin zu einer Suspension von 332,3 g Isophthalsäure in 190 g Wasser gibt. Diese Lösung wird noch mit einem Überschuss von 11,6 g (5 Gew.-%, bezogen auf die Diamine) Hexamethylendiamin versetzt.

Wie in Beispiel 1 legt man 200 g dieser Lösung in einem Dreihalskolben vor und erhitzt unter Stickstoff in 2 Stunden auf 270 °C. Dabei destilliert das Wasser ab, das Reaktionsprodukt erstarrt bei etwa 190 °C. Bei 200 °C erhält man wieder eine klare Schmelze. Im Verlaufe von 1 ½ Stunden gibt man 150 ml Salzlösung zu und destilliert das Wasser ab. Das laufend entnommene Vorkondensat hat eine relative Viskosität von 1,6.

Nach Zusatz von 3 Gew.-% Hexamethylendiamin kondensiert man das Vorkondensat bei 270 °C unter Stickstoff weiter. Man erhält ein Polyamid mit einer relativen Viskosität von 2,8.

Beispiel 4

Aus 116,3 g Isophthalsäure und 153,2 g (in dieser Menge sind 4 Gew.-% überschüssiges Diamin enthalten) Bis-(4-aminocyclohexyl)-methan stellt man bei 90–95 °C in 263,5 g Wasser ein Salz her und gibt 158,9 g ε-Caprolactam hinzu. Man erhält eine Suspension, von der man 300 g, wie in Beispiel 1 beschrieben, innerhalb 2 Stunden unter Stickstoff auf 270 °C erhitzt. Das Wasser destilliert dabei ab, oberhalb 110 °C bildet sich eine feste Masse. Bei 270 °C gibt man zu der nun klaren Schmelze im Laufe einer Stunde weitere 100 g wässrige Monomersalzlösung. Das Vorkondensat hat eine relative Viskosität von 1,7, die nach der weiteren Kondensation auf 2,4 ansteigt.

## Patentansprüche

1. Ein kontinuierliches Verfahren zur Herstellung von Polyamiden durch Polykondensation von wässrigen Lösungen von Salzen aus weitgehend äquimolaren Mengen Diaminen und Dicarbonsäuren, dadurch gekennzeichnet, dass man bei Atmosphärendruck die wässrige Salzlösung zu einer entsprechenden Vorkondensatschmelze kontinuierlich zugibt und gleichzeitig das Wasser der Salzlösung abdestilliert, wobei die Temperatur der Vorkondensationsschmelze nicht unter 180 °C absinken soll, und die laufend entnommene Vorkondensatschmelze in bekannter Weise bei Atmosphärendruck weiter kondensiert wird.

2. Ein Verfahren nach Anspruch 1, dadurch gekennzeichnet, dass die Vorkondensationsschmelze auf wenigstens 200 °C gehalten wird.

3. Ein Verfahren nach Anspruch 1 oder 2, dadurch gekennzeichnet, dass die 50–90%ige wässrige Salzlösung auf einer Temperatur von 70 bis 100 °C gehalten wird.

4. Ein Verfahren nach Ansprüchen 1–3, dadurch gekennzeichnet, dass bis zu einer relativen Viskosität von 1,1–1,8 vorkondensiert wird.

5. Ein Verfahren nach Ansprüchen 1–4, dadurch gekennzeichnet, dass amorphe Polyamide hergestellt werden.

## Claims

1. A continous process for the production of polyamides by the polycondensation of aqueous solutions of salts of substantially equimolar quantities of diamines and dicarboxylic acids, characterised in that under atmospheric pressure the aqueous salt solution is continuously added to a corresponding precondensate melt and the water of the salt solution is simultaneously distilled off, during which the temperature of the precondensation melt should not fall below 180 °C, and the continuously removed precondensate melt is condensed further in a known manner under atmospheric pressure.

2. A process according to Claim 1, characterised in that the precondensation melt is kept at at least 200 °C.

3. A process according to Claim 1 or 2, characterised in that the 50–90% aqueous salt solution is kept at a temperature of 70 to 100 °C.

4. A process according to Claims 1–3, characterised in that precondensation is carried out up to a relative viscosity of 1,1–1,8.

5. A process according to Claims 1–4, characterised in that amorphous polyamides are produced.

## Revendications

1. Un procédé continu pour la fabrication de polyamides par polycondensation de solutions aqueuses de sels de quantités largement équimolaires de diamines et d'acides dicarboxyliques, caractérisé en ce que l'on ajoute en continu sous pression atmosphérique la solution aqueuse de sel à une masse fondue de précondensat correspondante et on élimine simultanément l'eau de la solution de sel par distillation, la température de la masse fondue de précondensation ne devant pas tomber au-dessous de 180 °C et la masse fondue de précondensat retirée en continu étant encore condensée de manière connue sous pression atmosphérique.

2. Un procédé selon la revendication 1, caractérisé en ce que la masse fondue de précondensation est maintenue à au moins 200 °C.

3. Un procédé selon la revendication 1 ou 2, caractérisé en ce que la solution aqueuse de sel à 50–90% est maintenue à une température de 70 à 100 °C.

4. Un procédé selon les revendications 1–3, caractérisé en ce que l'on effectue la précondensation jusqu'à une viscosité relative de 1,1–1,8.

5. Un procédé selon les revendications 1–4, caractérisé en ce que l'on fabrique des polyamides amorphes.